Europäisches Patentamt

European Patent Office

Office européen des brevets

(11) Veröffentlichungsnummer: **0 362 381**
**A1**

## EUROPÄISCHE PATENTANMELDUNG
### veröffentlicht nach Art. 158 Abs. 3 EPÜ

(21) Anmeldenummer: 88904710.6

(22) Anmeldetag: 19.02.88

(86) Internationale Anmeldenummer:
PCT/SU88/00040

(87) Internationale Veröffentlichungsnummer:
WO 89/07494 (24.08.89 89/20)

(51) Int. Cl.$^5$: **B21B 35/14**

(43) Veröffentlichungstag der Anmeldung:
11.04.90 Patentblatt 90/15

(84) Benannte Vertragsstaaten:
**BE DE FR GB IT**

(71) Anmelder: **VSESOJUZNY ZAOCHNY POLITEKHNICHESKY INSTITUT**
ul. Pavla Korchagina, 22
**Moscow, 129805(SU)**

(72) Erfinder: **PLAKHTIN, Vladimir Dmitrievich**
ul. 16 Parkovaya, 55-1-95
**Moscow, 105523(SU)**
Erfinder: **KANEV, Nikolai Galaktionovich**
ul. Arkhangelskaya, 62-143
**Vologodskaya obl. Cherepovets, 162601(SU)**
Erfinder: **DANILOV, Leonid Ivanovich**
ul. Vereschagina, 51-8
**Vologodskaya obl. Cherepovets, 162606(SU)**
Erfinder: **SOROKIN, Alexandr Mikhailovich**
pr. Pobedy, 206-13
**Vologodskaya obl. Cherepovets, 162624(SU)**
Erfinder: **KARAKIN, Jury Mikhailovich**
Sovetsky pr., 106-77
**Vologodskaya obl. Cherepovets, 162622(SU)**

(74) Vertreter: **Patentanwälte Beetz sen. - Beetz jun. Timpe - Siegfried - Schmitt-Fumian-Mayr**
Steinsdorfstrasse 10
**D-8000 München 22(DE)**

(54) **GEZAHNTE KUPPLUNG.**

(57) Das Wesen der Erfindung besteht darin, dass sämtliche Zähne (4,5,6,7) ebene Flankenflächen haben. Dabei sind die Zähne (4) des Gehäuses (1) und die Innenzähne (7) des Zwischenringes (3) Π-förmig ausgebildet, und die Aussenzähne (6) des letzteren und die Zähne (5) des Kopfes (2) sind trapezförmig, die kleinere Grundlinie an der Krone des Zahnes (5), ausgebildet. Die Aussenflächen (8) der Zähne (9) des Zwischenringes (3) und die Aussenflächen (10) der Zähne (11) des Kopfes (2), deren Längsachsen in den Symmetrieebenen (M-M und N-N) des Zwischenringes (3) bzw. des Kopfes (2) liegen, sind

sphärisch ausgebildet und berühren den Grund der Lücken (12, 13) zwischen den ihnen zugeordneten Paaren der Zähne (4,7) des Gehäuses (1) bzw. des Zwischenringes (3), während die Aussenflächen der übrigen Zähne (4,6 und 5,7) und die Grundflächen der Lücken zwischen sämtlichen Zähnen (4,5,6,7,9,11) eben sind und auf den mit den Längssymmetrieachsen der Zähne (9,11) mit sphärischen Aussenflächen (8 und 10) zusammenfallenden Symmetrieebenen (M-M oder N-N) des Zwischenringes (3) bzw. des Kopfes (2) senkrecht stenen.

# ZAHNKUPPLUNG

## Technisches Gebiet

Die vorliegende Erfindung bezieht sich auf das Gebiet des Walzbetriebs und betrifft insbesondere eine Zahnkupplung.

## Zugrundeliegender Stand der Technik

Die vorliegende Erfindung kann in allen Walzwerken sowie in anderen Vorrichtungen, wo es auf das Übertragen der Drehbewegung bei grossen Schiefstellungen der zu verbindenden Wellen und bei grossen Drehmomenten ankommt, angewendet werden.

Mit dem grössten Nutzeffekt kann diese Erfindung in Spindelvorrichtungen der Walzenantriebe von Walzwerken verwendet werden.

Gegenwärtig kommt es oft wegen hoher Arbeitsintensität der Anfertigung, niedriger Festigkeit und geringer Tragfähigkeit zum Ausfall von in Spindelvorrichtungen der Walzenantriebe von Walzwerken zum Einsatz kommenden Zahnkupplungen, wodurch strörungsbedingte Stillstandszeiten der Walzwerke zunehmen und die Leistungsfähigkeit der letzteren fällt.

Wegen Zahnverschleiss der Zahnkupplungen vergrössern sich die Zwischenräume zwischen den Zähnen und wird die Mittigkeit zwischen der Kupplung und der Walze gestört.

Als Folge davon treten Radialschläge der Walzen auf, die eine periodische Dickenunterschiedlichkeit in Längsrichtung des Walzgutes hervorrufen und die Qualität desselben vermindern.

Es ist eine Zahnkupplung (JP, A, 44-15698) bekannt, enthaltend ein Gehäuse mit vier Gruppen von ∏-förmigen Zähnen, die an seiner Aussenfläche hergestellt und diametral entgegengesetzt in jedem Paar angeordnet sind, einen Kopf mit vier Gruppen von ∏-förmigen Zähnen, die an seiner Aussenfläche hergestellt und diametral entgegengesetzt in jedem Paar angeordnet sind, und vier zwischen dem Kopf und dem Gehäuse befindliche und mit ihnen in Eingriff stehende Zwischenelemente mit ∏-förmigen Zähnen, die drehbar bezüglich der Achsen, welche in Radialrichtung senkrecht zur Kopfachse verlaufen, eingebaut sind. Die Grundflächen der Zahnlücken sind zylindrisch

ausgebildet.

Die ⊓ -förmigen Zähne sorgen dafür, dass die Kontaktdrücke zwischen den Zähnen und somit auch deren Abnutzung sich vermindern und die Zuverlässigkeit der Kupplung im ganzen sich erhöht.

Da aber die Grundflächen der Zahnlücken zylindrisch ausgebildet sind, wird die Anfertigung der Kupplung erschwert und die Zentrierung des Gehäuses bezüglich des Kopfes unmöglich. Infolgedessen wird die Gleichachsigkeit der Kupplung und der Walze gestört, was Radialschläge der Walzen und eine Dickenunterschiedlichkeit in Längsrichtung des Walzgutes hervorruft. Diese Dickenunterschiedlichkeit vermindert wesentlich die Qualität des Walzgutes.

Es ist eine Zahnkupplung bekannt (PL, A, 105539), enthaltend ein Gehäuse mit zwei Gruppen von diametral entgegengesetzt angeordneten Zähnen, einen innerhalb des Gehäuses eingebauten Kopf, der zwei Gruppen von an seiner Aussenfläche diametral entgegengesetzt und zu den Zähnen des Gehäuses senkrecht angeordneten Zähnen aufweist, und einen zwischen Kopf und Gehäuse eingebauten und vier in jedem Paar diametral entgegengesetzt angeordnete Gruppen von Zähnen aufweisenden Zwischenring, bei dem zwei Gruppen der Zähne an seiner Aussenfläche hergestellt sind und mit den Zähnen des Gehäuses im Eingriff stehen und zwei weitere Gruppen der Zähne an seiner Innenfläche hergestellt sind und mit den Zähnen des Kopfes im Eingriff stehen. Dabei besitzen die Zähne am Gehäuse, am Kopf und am Zwischenring ebene Flankenflächen und zylindrische Aussenflächen.

Ein solcher Aufbau der Zahnkupplung gewährleistet nicht die gegenseitige Zentrierung des Kopfes, des Gehäuses und des Zwischenringes, denn es gibt Radialspiele zwischen den Zähnen sämtlicher Paare der im Eingriff stehenden Gruppen.

Infolgedessen treten Radialschläge der mit Hilfe dieser Kupplung zu verbindenden Walzen und eine Dickenunterschiedlichkeit in Längsrichtung des Walzgutes auf, die die Qualität des Walzgutes vermindert.

Darüber hinaus wird wegen fehlender Zentrierung die gleichmässige Verteilung der Kontaktdrücke zwischen den Kupplungszähnen gestört, es steigt die Abnutzungsintensität der Zähne und vermindert sich die Zuverlässigkeit der Kupplung. Die zylindrische Form der Aussenfläche der Zähne erhöht den Arbeitsaufwand bei der Anfertigung der Kupplung.

Offenbarung der Erfindung

Der Erfindung liegt die Aufgabe zugrunde, eine Zahnkupplung zu schaffen, die durch Zentrieren des Gehäuses, des Kopfes und des Zwischenringes eine Erhöhung der Walzgutqualität und der Walzwerksleistung ermöglicht.

Diese Aufgabe wird dadurch gelöst, dass in einer Zahnkupplung, enthaltend ein Gehäuse mit zwei an seiner Innenfläche diametral entgegengesetzt angeordneten Gruppen von Zähnen, einen innerhalb des Gehäuses untergebrachten und zwei an seiner Aussenfläche diametral entgegengesetzt und senkrecht zu den Zähnen des Gehäuses angeotdnete Gruppen von Zähnen aufweisenden Kopf und einen zwischen Gehäuse und Kopf eingebauten vier diametral entgegengesetzt angeordnete Gruppen von Zähnen aufweisenden Zwischenring, bei dem zwei Gruppen der Zähne an seiner Aussenfläche hergestellt sind und mit den Zähnen des Gehäuses im Eingriff stehen und zwei weitere Gruppen der Zähne an seiner Innenfläche hergestellt sind und mit den Zähnen des Kopfes im Eingriff stehen, wobei alle Zähne ebene Seitenflächen haben, erfindungsgemäss die Zähne des Gehäuses und die Innenzähne des Zwischenringes Π -förmig ausgebildet sind und die Aussenzähne des Zwischenringes und die Zähne des Kopfes trapezförmig, die kleinere Grundlinie an der Krone des Zahnes, ausgebildet sind, wobei die Aussenflächen der Zähne des Zwischenringes und des Kopfes, deren Längssymmetrieachsen in den Symmetrieebenen des Zwischenringes bzw. des Kopfes liegen, sphärisch ausgebildet sind und den Grund der Lücken zwischen den ihnen zugeordneten Paaren der Zähne des Gehäuses bzw. des Zwischenringes berühren, während die Aussenflächen der übrigen Zähne und die Grundflächen der Zahnlücken eben sind und auf den mit den Längssymmetrieachsen der Zähne mit sphärischen Aussenflächen zusammenfallenden Symmetrieebenen des Zwischenringes bzw. des Kopfes senkrecht stehen.

Die ∏ -förmige Ausbildung der Zähne des Gehäuses und der Innenzähne des Zwischenringes und die trapezförmige Ausbildung der Aussenzähne des Zwischenringes und der Zähne des Kopfes bewirken den Kontakt der im Eingriff stehenden Zähne über ihre gesamte Flankenfläche und eine gleichmässige Verteilung der Kontaktdrücke auf ihr bei Vorhandensein eines erforderlichen Montagespiels zwischen den Zähnen.

Dadurch wird die Abnutzung der Zähne stark reduziert, ihre Lebensdauer erhöht, die Anzahl der Ausfälle der Kupplung und der damit zusammenhängenden störungsbedingten Stillstände des Walzwerkes vermindert und die Leistungsfähigkeit des letzteren gesteigert.

Die Ausführung der kugeligen Aussenflächen an den Zähnen des Zwischenringes und des Kopfes, deren Längssymmetrieachsen in den Symmetrieebenen des Zwischenringes bzw. des Kopfes liegen, sowie die Anlage dieser Oberflächen am Grund der Lücken zwischen den ihnen zugeordneten Paaren der Zähne des Gehäuses bzw. des Zwischenringes gewährleistet das Zentrieren des Gehäuses, des Kopfes und des Zwischenringes beim Walzen.

Dadurch wird die Gleichachsigkeit der Kupplung und der Walze sichergestellt, Radialschläge der Walzen beseitigt, die Dickenunterschiedlichkeit in Längsrichtung des Walzgutes vermindert und die Qualität des Walzgutes wesentlich verbessert.

Die Ausführung der ebenen Aussenflächen an den übrigen Zähnen verringert die Arbeitsintensität der Anfertigung, vereinfacht den Aufbau der Kupplung und senkt ihre Fertigungskosten.

Es ist zweckmässig, dass die trapezförmigen Zähne einen Neigungswinkel $\varphi$ des Trapezschenkels zur Trapezhöhe aufweisen sollen, dessen Größe sich aus folgender Beziehung ergibt:

EP 0 362 381 A1

$$\varphi = \frac{h_o - \sqrt{h_o - b\delta}}{b}$$

wo $h_o$ - den Abstand von dem Mittelpunkt O der Zahnkupplung bis zu den Ebenen der Aussenflächen der ∏ -förmigen Zähne des Gehäuses bzw. des Zwischenringes,

$\delta$ - das Kleinstspiel zwischen den Flankenflächen der ∏ -förmigen und der trapezförmigen Zähne,

b - die Lückenbreite zwischen den ∏ -förmigen Zähnen bedeuten.

Ein solcher Winkel sichert den Kontakt der ∏ -förmigen und der trapezförmigen Zähne über die Fläche bei Vorhandensein eines erforderlichen Montagespiels zwischen den Zähnen. Dies vereinfacht den Zusammenbau der Kupplung, vermindert die Kontaktdrücke zwischen den Zähnen und erhöht die Lebensdauer der Kupplung.

Die Anwendung der vorliegenden Erfindung gewährleistet also eine höhere Qualität des Walzgutes und eine höhere Leistung des Walzwerkes, eine niedrigeren Herstellungs- und Montageaufwand, einen vereinfachten Aufbau der Kupplung und geringere Herstellungskosten.

Kurze Beschreibung der Zeichnungen

Zum besseren Verständnis der Erfindung sind nachstehend konkrete Ausführungsbeispiele unter Bezugnahme auf beigefügte Zeichnungen angeführt. In den Zeichnungen zeigt

Fig. 1 in schematischer Darstellung die Gesamtansicht der Zahnkupplung, gemäss der Erfindung, im Querschnitt;

Fig. 2 den Schnitt nach Linie II - II der Fig. 1;

Fig. 3 die Baugruppe A der Fig. 1 in vergrössertem Masstab.

Beste Ausführungsbeispiel der Erfindung

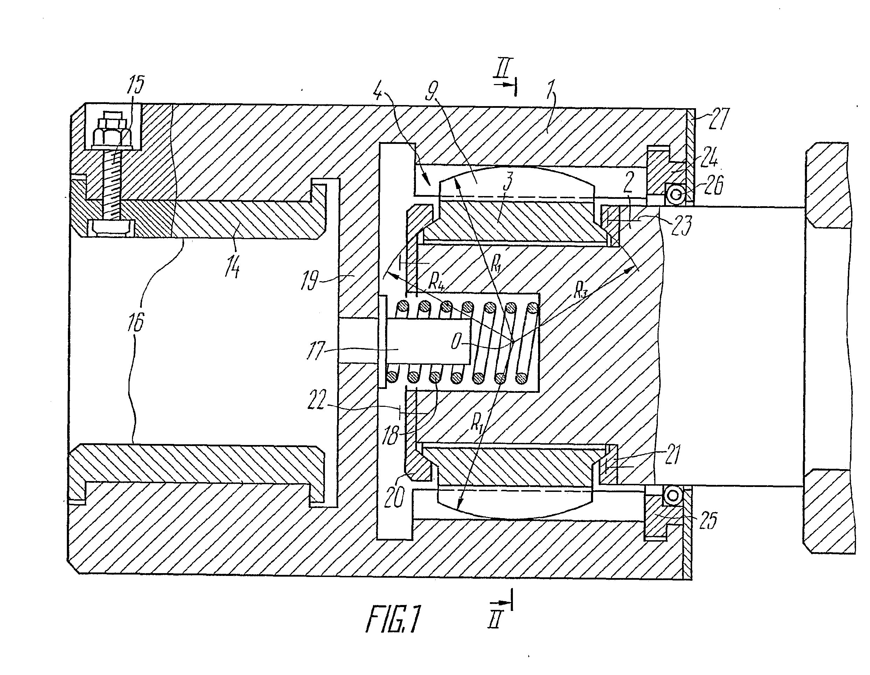

Die Zahnkupplung enthält ein Gehäuse 1 (Fig. 1), einen Kopf 2, der innerhalb des Gehäuses 1 eingebaut ist, und einen zwischen dem Gehäuse 1 und dem Kopf 2 eingebauten Zwischenring 3.

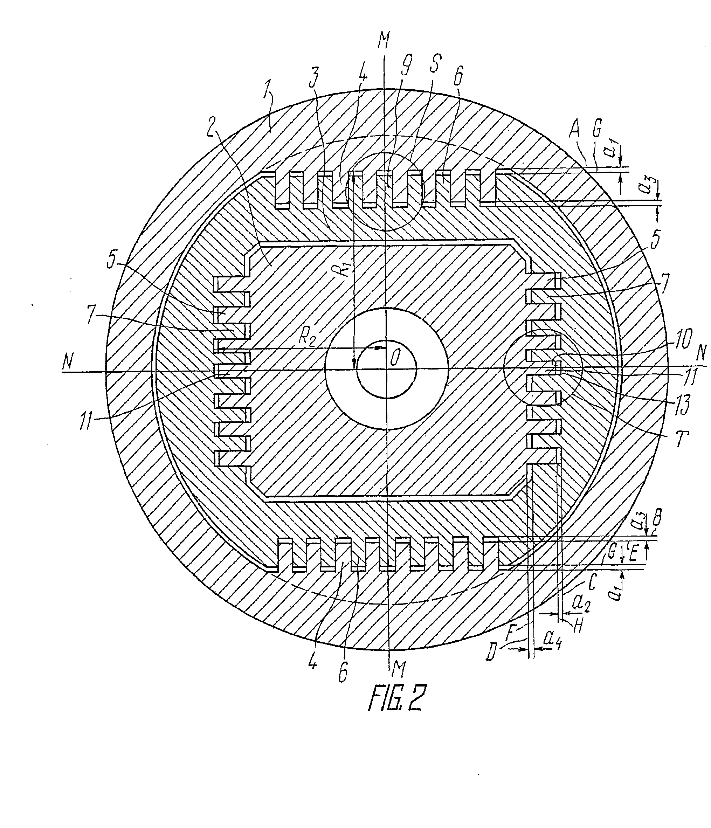

Das Gehäuse 1 enthält zwei Gruppen von Zähnen 4 (Fig. 2), die an seiner Innenfläche diametral entgegengesetzt angeordnet sind.

An der Aussenfläche des Kopfes 2 sind zwei Gruppen von Zähnen 5 hergestellt, die diametral entgegengesetzt und zu den Gruppen der Zähne 4 des Gehäuses 1 senkrecht angeordnet sind.

Am Zwischenring 3 sind vier Gruppen der Zähne 6 und 7 hergestellt, die diametral entgegengesetzt angeordnet sind. Zwei Gruppen von diesen Gruppen der Zähne 6 sind an der Aussenfläche des Zwischenringes 3 angeordnet. Diese Zähne 6 (im weiteren werden sie als Aussenzähne 6 des Zwischenringes 3 bezeichnet) stehen im Eingriff mit den Zähnen 4 des Gehäuses 1. Zwei weitere Gruppen dieser Zähne 7 sind an der Innenfläche des Zwischenringes 3 angeordnet. Diese Zähne 7 (im weiteren werden sie Innenzähne 7 des Zwischenringes 3 bezeichnet) stehen im Eingriff mit den Zähnen 5 des Kopfes 2. Alle Zähne 4, 5, 6, 7 des Gehäuses 1, des Kopfes 2 und des Zwischenringes 3 haben ebene Flankenflächen.

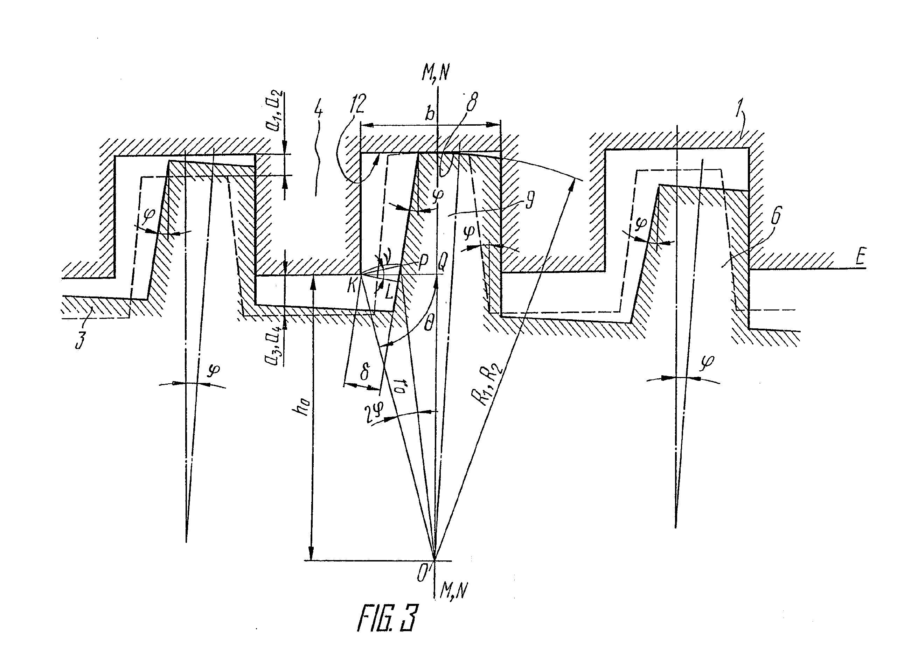

Die Zähne 4 (Fig. 3) des Gehäuses 1 und die Innenzähne 7 (Fig. 2) des Zwischenringes 3 sind ∏ -förmig (Fig. 3) ausgebildet, während die Aussenzähne 5 (Fig. 2) des Kopfes 2 trapezförmig (Fig. 3), die kleinere Grundlinie an der Krone jedes Zahnes 5 (Fig. 2), 6 (Fig. 3) ausgebildet sind.

Dies gewährleistet den Kontakt sämtlicher Zähne 4,5, 6,7 (Fig. 2), die im Eingriff stehen, über die gesamte Flankenfläche und die gleichmässige Verteilung der Kontaktdrücke auf dieser Fläche.

Dadurch wird die Abnutzung der Zähne 4,5,6,7 stark vermindert und ihre Lebensdauer erhöht. Dies führt zur Verminderung der Anzahl von Ausfällen während des Betriebs der Kupplung im ganzen und der Anzahl von damit zusammenhängenden Stillständen des Walzwerkes, was die Leistung des letzteren erhöht.

Dabei wird zwischen den im Eingriff stehenden Zähnen 4,5,6,7 ein erforderliches Montagespiel $\delta$ sichergestellt, dessen Mindestwert gleich dem Abstand zwischen den Flankenflächen der im Eingriff stehenden ∏ -förmigen und trapezförmigen Zähne 4,7 und 5,6 bei deren Kontakt über die gegenüberliedenden Flankenflächen ist. Durch die Montage-

spiele $\delta$ zwischen den Zähnen 4,5,6,7 wird der Zusammenbau der Kupplung vereinfacht und dessen Dauer verkürzt.

Die Aussenflächen 8 der Zähne 9 des Zwischenringes 3 und die Aussenflächen 10 (Fig. 2) der Zähne 11 des Kopfes 2, deren Längssymmetrieachsen in den Symmetrieebenen M-M und N-N des Zwischenringes 3 bzw. des Kopfes 2 liegen, sind sphärisch ausgebildet und werden aus dem Mittelpunkt O der Kupplung durch die Kugelradien $R_1$ bzw. $R_2$ beschrieben (des weiteren sollen diese Zähne 9 und 11 als Kugelzähne bezeichnet werden). Dabei berühren sie den Grund der Lücken 12 (Fig. 3), 13 (Fig. 2) zwischen den ihnen zugeordneten Paaren der Zähne 4 des Gehäuses 1 bzw. der Innenzähne 7 des Zwischenringes 3.

Der Mittelpunkt O der Kupplung liegt im Schnittpunkt der Längsachsen des Gehäuses 1 und des Kopfes 2.

Dadurch wird ermöglicht, dass das Gehäuse 1 und der Kopf 2 sich relativ in zwei aufeinander senkrecht stehenden Ebenen drehen können und dass das Gehäuse 1, der Kopf 2 und der Zwischenring 3 zentriert werden können und somit die Gleichachsigkeit der Kupplung und der Walze erzielt wird.

Aufgrund des Obengesagten werden Radialschläge der Walzen beim Walzvorgang beseitigt, die Dickenunterschiedlichkeit in Längsrichtung des Walzgutes vermindert und die Qualität des Walzgutes wesentlich verbessert.

In Fig. 3 ist die Baugruppe A dargestellt, wo der Eingriff der ⊓-förmigen Zähne 4 des Gehäuses 1 und der trapezförmigen Zähne 6 des Zwischenringes 3 gezeigt ist. Ausserdem ist in Fig. 3 der Kontakt des trapezförmigen Kugelzahnes 9 des Zwischenringes 3 mit dem Grund der Lücke 12 zwischen dem ihm zugeordneten Paar der Zähne 4 des Gehäuses 1 gezeigt.

Die in Fig. 2 gezeigte Baugruppe B ist ähnlich der Baugruppe A ausgebildet und zeigt den Eingriff der ⊓-förmigen Innenzähne 7 des Zwischenringes 3 und der trapezförmigen Zähne 5 des Kopfes 2 und den Kontakt des trapezförmigen Kugelzahnes 11 des Kopfes 2 mit dem Grund der Lücke 13 zwischen dem ihm zugeordneten Paar der Innenzähne 7 des Zwischenringes 3, die ähnlich dem Eingriff und dem Kontakt in Fig. 3 ausgeführt sind.

Die Aussenflächen aller übrigen Zähne des Gehäuses 1, des Kopfes 2 und des Zwischenringes 3 und die Grundflächen der Lücken zwischen sämtlichen Zähnen des Gehäuses 1, des Kopfes 2 und des Zwischenringes 3 sind eben ausgebildet. Die Grundflächen der Lücken zwischen den Zähnen 4 des Gehäuses 1 sind in den Ebenen A gelegen ausgeführt; die Grundflächen der Lücken zwischen den Aussenzähnen 6 des Zwischenringes 3 sind in den Ebenen B gelegen ausgeführt, während die Grundflächen der Lücken zwischen den Innenzähnen 7 des Zwischenringes 3 sind in den Ebenen C gelegen ausgeführt; die Grundflächen der Lücken zwischen den Zähnen 5 des Kopfes 2 liegen in den Ebenen D. Die Oberflächen der Vorsprünge der Zähne 4 des Gehäuses 1 liegen in den Ebenen E; die Oberflächen der Vorsprünge der Innenzähne 7 des Zwischenringes 3 liegen in den Ebenen F, die seiner Aussenzähne 6 in den Ebenen G und die Oberflächen der Zähne 5 des Kopfes 2 liegen in den Ebenen H.

Die Ebenen A, B, E, G stehen senkrecht auf der Symmetrieebene M-M des Zwischenringes 3 und die Ebenen C, D, F, H stehen senkrecht auf der Symmetrieebene N-N des Kopfes 2.

Eine solche konstruktive Ausführung der Zahnkupplung vereinfacht deren Anfertigung.

Darüber hinaus gewährleistet sie zwei Freiheitsgrade der Zahnkupplung.

Zwischen den Ebenen A und G ist ein Spiel $A_1$, zwischen den Ebenen C und H ein Spiel $A_2$, zwischen den Ebenen B und E ein Spiel $A_3$, zwischen den Ebenen D und F ein Spiel $A_4$ vorgesehen. Diese Spiele $A_1, A_2, A_3, A_4$ werden in Abhängigkeit von dem Schiefstellungswinkel zwischen dem Gehäuse 1 und dem Kopf 2 beim Übertragen des Drehmomentes gewählt. Dadurch wird die Arbeitsintensität der Anfertigung der Zahnkupplung gesenkt, deren Aufbau vereinfacht und werden die Herstellungskosten der Zahnkupplung gesenkt.

In dem Gehäuse 1 (Fig. 1) sind austauschbare ebene Platten 14 vorgesehen, die mit Schraubenbolzen 15 befestigt sind und in der Kupplung ein Maul mit den ebenen Flächen 16 zur Verbindung mit den Ebenen des Walzenzapfens (in der Zeichnung nicht gezeigt) bilden.

Innerhalb des Kopfes 2 ist eine Ausbohrung hergestellt, in der auf einem Führungsstab 17 eine Feder 18 zum Dämpfen der Axialbelastungen angeordnet ist. Der Führungsstab 17 ist in einen im Gehäuse 1 vorhandenen Steg 19 eingepresst.

Der Zwischenring 3 ist gegen Axialverschiebung auf dem Kopf 2 mittels am Kopf 2 durch Bolzen 22 und 23 befestigter Deckel 20 und 23 gesichert.

Die Berührungsflächen der Deckel 20 und 23 und des Zwischenringes 3 sind kugelig ausgebildet und aus dem Mittelpunkt O der Zahnkupplung durch die Radien $R_4$ bzw. $R_3$ beschrieben. Dies ermöglicht die relative Winkelverschiebung des Gehäuses 1, des Kopfes 2 und des Zwischenringes 3 um den Mittelpunkt O der Zahnkupplung.

Um die Verzahnung abzudichten und den Schmierstoff darin zurückzuhalten, sind innerhalb des Gehäuses 1 Halbringe 24 und 25 eingebaut mit einer Abdichtung 26, die durch einen an der Stirnseite des Gehäuses 1 befestigten Deckel 27 festgehalten wird.

Um den Kontakt der ∏-förmigen Zähne 4 des Gehäuses 1 und der Aussenzähne 6 des Zwischenringes 3 mit den trapezförmigen Kugelzähnen 9 des Zwischenringes 3 und den trapezförmigen Kugelzähnen 11 des Kopfes 2 über die gesamte Flankenfläche herzustellen, muss der Neigungswinkel $\varphi$ (Fig. 3) des Trapezschenkels zur Trapezhöhe gleich dem halben Drehwinkel des Gehäuses 1 bezüglich des Zwischenringes 3 und des Zwischenringes 3 (Fig. 2) bezüglich des Kopfes 2 im Feld des Kleinstspiels $\delta$ (Fig. 3) zwischen den Flankenflächen der erwähnten ∏-förmigen und der erwähnten trapezförmigen Zähne vor deren Kontakt sein.

Der Neigungswinkel $\varphi$ lässt sich aus der Lösung des rechtwinkligen Dreiecks KLP (s. Fig. 3) ermitteln.

Unter Berücksichtigung der Kleinigkeit $\varphi$ kann man folgende Beziehung schreiben:

$$\delta^2 + \delta^2 \cdot \operatorname{tg}^2 \nu = 4 r_0^2 \cdot \sin^2 \varphi \qquad (1)$$

wo $\nu$ - den Winkel KLP, d.h. den Winkel zwischen der Sehne KP und der Senkrechten KL, die gleich $\delta$ ist und aus dem Punkt K auf der Kante des $\Pi$ -förmigen Zahnes 4 auf die Flankenfläche des mit diesem $\Pi$ -förmigen Zahn 4 im Eingriff stehenden trapezförmigen Zahnes 9 errichtet ist;

$r_o$ - den Radiusvektor des Punktes K, der den Bogen KP bei der relativen Verschiebung der $\Pi$ -förmigen und der trapezförmigen Zähne 4 bzw. 9 im Feld des Spiels zwischen ihnen beschreibt, bedeuten.

Aus der Fig. 3 ist ersichtlich, dass:

$$\nu = 90^0 - (\theta - \varphi) \qquad (2),$$

wo $\theta$ der Winkel zwischen der Ebene E der Aussenfläche des $\Pi$ -förmigen Zahnes 4 und dem Radiusvektor $r_o E$ des Punktes K der Kante dieses Zahnes 4 ist.

Man findet den Punkt Q. Er liegt im Schnittpunkt der Ebene E und der Normalen zu dieser Ebene E, die aus dem Mittelpunkt O der Zahnkupplung gezogen ist.

Aus dem Dreieck KOQ geht hervor:

$$\text{tg}\,\theta = \frac{2h_o}{b} \;; \quad \cos\theta = \frac{h_o}{2r_o} \;; \quad r_o = \frac{h_o}{\sin\theta} \qquad (3),$$

wo h - den Abstand zwischen dem Mittelpunkt O der Zahnkupplung und der Ebene E, der gleich der Normalen OQ ist;

b die Lückenbreite zwischen den $\Pi$ -förmigen Zähnen 4 bedeutet.

Die gemeinsame Lösung der Gleichungen (1), (2) und (3) ergibt die folgende Beziehung zur Bestimmung des Winkels $\varphi$ :

$$\varphi = \frac{h_o - \sqrt{h_o^2 - b\delta}}{b} \qquad (4).$$

Dank einer solchen Ausführung der Zahnkupplung liegt ein universelles Gelenk mit zwei Freiheitsgraden vor, das die Übertragung der Drehmomente bei grossen Schiefstellungswinkeln zwischen den Achsen des Gehäuses 1 und des Kopfes 2 der Zahnkupplung ermöglicht.

Die Zahnkupplung arbeitet wie folgt.

Bei der Übertragung des Drehmomentes von dem Gehäuse 1 zum Kopf 2 oder umgekehrt unter deren relativer Schiefstellung erfolgt ein Schluss zwischen den $\Pi$ -förmi-

gen und den trapezförmigen Zähnen 4,7 und 9,11. Beim Walzen und Drehen der Zahnkupplung geschehen Winkelverschiebungen des Gehäuses 1 gegenüber dem Zwischenring 3 und des Zwischenrings 3 gegenüber dem Kopf 2 in den aufeinander senkrecht stehenden Ebenen M-M und N-N. Der Kontakt zwischen den im Eingriff stehenden Zähnen kommt dabei über ihre ebenen Flankenflächen vor sich, was zur Senkung der Kontaktdrücke zwischen den Flankenflächen sämtlicher im Eingriff stehenden Zähne, zur Erhöhung ihrer Lebensdauer und somit zur Erhöhung der Lebensdauer der Kupplung im ganzen beiträgt.

Der ständige Kontakt der sphärischen Aussenflächen 8 der Zähne 9 des Zwischenringes 3 und der sphärischen Aussenflächen 10 der Zähne 11 des Kopfes 2 mit den ebenen Grundflächen der Lücken 12 und 13 zwischen den ihnen zugeordneten Paaren der Zähne 4 des Gehäuses 1 und der Innenzähne 7 des Zwischenringes 3 führt herbei, dass das Gehäuse 1, der Kopf 2 und der Zwischenring 3 in bezug auf den einheitlichen Mittelpunkt O der Kupplung ständig zentriert sind.

Dabei liegt der Mittelpunkt O der Kupplung immer an der Achse der Walze, wodurch Radialschläge der Walzen beseitigt werden, die Dickenunterschiedlichkeit des Walzgutes vermindert wird und die Qualität desselben sich erhöht.

Somit wird dank der Anwendung der vorliegenden Erfindung gewährleistet, daß die Walzgutqualität und die Walzwerksleistung erhöht, der Herstellungs- und der Montageaufwand verringert, der Aufbau der Kupplung vereinfacht, die Herstellungskosten der letzteren gesenkt werden.

Beispiel.

Es ist erforderlich, den Neigungswinkel $\varphi$ der Flankenflächen der trapezförmigen Zähne zu deren Höhe für die Verzahnung Gehäuse 1 - der Zwischenring 3 bei folgenden Daten zu bestimmen:

$h_0$ = 220 mm; b = 20 mm; $\delta$ = 0,5 mm.

Durch Einsetzen dieser Angaben in die Formel (4) erhält man $\varphi$ = 0,012 Radiant.

Gewerbliche Verwertbarkeit

Die vorliegende Erfindung kann am effektivsten in Antriebstransmissionen der Arbeitswalzen von Breitbandwalzwerken verwendet werden.

Bei der Anwendung der vorliegenden Erfindung vermindert sich die Dickenunterschiedlichkeit des Walzgutes um 15 bis 20 %, während die Leistung des Walzwerkes sich um 5 bis 10 % erhöht. Dabei steigt die Lebensdauer der Zahnkupplungen um das 3 bis 4fache.

PATENTANSPRÜCHE:

1. Zahnkupplung, enthaltend ein Gehäuse (1) mit zwei an seiner Innenfläche diametral entgegengesetzt angeordneten Gruppen von Zähnen (4), einen innerhalb des Gehäuses (1) untergebrachten und zwei an seiner Aussenfläche diametral entgegengesetzt und senkrecht zu den Gruppen der Zähne (4) des Gehäuses (1) angeordnete Gruppen von Zähnen (5) aufweisenden Kopf (2) und einen zwischen dem Gehäuse (1) und dem Kopf (2) eingebauten und vier diametral entgegengesetzt angeordnete Gruppen von Zähnen (6, 7) aufweisenden Zwischenring (3), bei dem zwei Gruppen der Zähne (6) an seiner Aussenfläche hergestellt sind und mit den Gruppen der Zähne (4) des Gehäuses (1) im Eingriff stehen und zwei weitere Gruppen der Zähne (7) an seiner Innenfläche hergestellt sind und mit den Gruppen der Zähne (5) des Kopfes (2) im Eingriff stehen, wobei alle Zähne (4, 5, 6, 7) ebene Seitenflächen haben, dadurch g e k e n n z e i c h n e t, dass die Zähne (4) des Gehäuses (1) und die Innenzähne (7) des Zwischenringes (3) ⊓ -förmig ausgebildet sind und die Aussenzähne (6) des letzteren und die Zähne (5) des Kopfes (2) trapezförmig, die kleinere Grundlinie an der Krone des Zahnes (5), ausgebildet sind, wobei die Aussenflächen (8, 10) der Zähne (9, 11) des Zwischenringes (3) und des Kopfes (2), deren Längsachsen in den Symmetrieebenen (M-M und N-N) des Zwischenringes (3) bzw. des Kopfes (2) liegen, sphärisch ausgebildet sind und den Grund der Lücke (12, 13) zwischen den ihnen zugeordneten Paaren der Zähne (4,7) des Gehäuses (1) bzw. des Zwischenringes (3) berühren, während die Aussenflächen der übrigen Zähne (4,6 und 5,7) und die Grundflächen der Lücken zwischen sämtlichen Zähnen (4,5,6,7,9,11) eben sind und auf den mit den Längssymmetrieachsen der Zähne (9,11) mit sphärischen Aussenflächen (8 und 10) zusammenfallenden Symmetrieebenen M-M und N-N des Zwischenringes (3) bzw. des Kopfes (2) senkrecht stehen.

2. Zahnkupplung nach Anspruch 1, dadurch g e k e n n z e i c h n e t, dass die trapezförmigen Zähne (5,6,9,11) einen Neigungswinkel $\varphi$ des Trapezschenkels zur Trapezhöhe aufweisen, dessen Größe sich aus der Beziehung ergibt:

$$\varphi = \frac{h_o - \sqrt{h_o^2 - b\delta}}{b}$$

wo $h_o$ den Abstand von dem Mittelpunkt O der Zahnkupplung bis zu den Ebenen der Aussenflächen der ⊓ -förmigen Zähne (4,7) des Gehäuses (1), bzw. des Zwischenringes (3);

$\delta$ das Kleinstspiel zwischen den Seitenflächen der ⊓ -förmigen und der trapezförmigen Zähne (4,7 und 9,11);

b die Lückenbreite zwischen allen ⊓ -förmigen Zähnen bedeutet.

FIG.1

EP 0 362 381 A1

*FIG. 2*

FIG. 3

EP 0 362 381 A1

# INTERNATIONAL SEARCH REPORT

International Application No PCT/SU 88/00040

## I. CLASSIFICATION OF SUBJECT MATTER (if several classification symbols apply, indicate all)

According to International Patent Classification (IPC) or to both National Classification and IPC

IPC⁴: B 21 B 35/14

## II. FIELDS SEARCHED

### Minimum Documentation Searched

| Classification System | Classification Symbols |
|---|---|
| IPC⁴: | B 21 B 35/14, F 16 D 3/18 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | US, A, 3994144, (Ronald La Forge), 30 November 1976, see figure 1, column 3 lines 1-11 | 1,2 |
| A | US, A, 4098096, (The United States of America as represented by the Secretary of the Navy), 4 July 1978, see figures 1,2 | 1,2 |
| A | DE, A1, 2447582, (Zahnradfabrik Friedrichshafen AG), 8 April 1976, see figure 2 | 1,2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 2 September 1988 (02.09.88) | 5 November 1988 (05.11.88) |
| International Searching Authority | Signature of Authorized Officer |
| ISA/SU | |

Form PCT/ISA/210 (second sheet) (January 1985)